# EUROPEAN PATENT APPLICATION

(11) **EP 3 179 433 A1**
(43) Date of publication of application: **14.06.2017**
(21) Application number: 16198821.7
(22) Date of filing: 15.11.2016
(51) Int. Cl.: G06Q 30/00

(54) **INFORMATION PUSHING METHOD AND DEVICE**

(30) Priority: 09.12.2015 CN 201510903330
(71) Applicant: Xiaomi Inc., Beijing 100085 (CN)
(72) Inventor: CHEN, Shuai, Haidian District, Beijing 100085 (CN); LIU, Tiejun, Haidian District, Beijing 100085 (CN); ZHANG, Xiangyang, Haidian District, Beijing 100085 (CN)
(74) Representative: Sadler, Peter Frederick

(57) **Abstract**

The present disclosure relates to an information pushing method and device. The method includes that: terminal information indicating that a target terminal is replaceable is acquired (S11); a replacement probability of the target terminal is updated (S12) according to the terminal information, an updated replacement probability being higher than the replacement probability before updating; and the replacement probability is sent to the target terminal (S13).

## Description

### TECHNICAL FIELD

The present disclosure generally relates to the technical field of data processing, and more particularly, to an information pushing method and device.

### BACKGROUND

At present, mobile phones are rapidly upgraded, and an average replacement period of smart mobile phones is 27 months.

### SUMMARY

The embodiments of the present disclosure provide an information pushing method and device. The technical solutions are implemented as follows.

According to a first aspect of the embodiments of the present disclosure, an information pushing method is provided, which includes that:

terminal information indicating that a target terminal is replaceable is acquired;
a replacement probability of the target terminal is updated according to the terminal information, an updated replacement probability being higher than the replacement probability before updating; and
the replacement probability is sent to the target terminal.

Thus, a user is prompted whether to replace the target terminal or not by acquiring the terminal information of the target terminal and determining the replacement probability of the target terminal. For determination of the replacement probability of the target terminal, not only is a performance factor of the target terminal considered, but also a behavior factor of the user for the target terminal is considered, so that determination of the replacement probability is more accurate and consistent with a practical condition, the obtained replacement probability has higher reference value for the user, and better user experiences are provided.

Before replacing a mobile phone, a user may execute some specific operations on the mobile phone, such as, in response to frequent crashing caused by poor configuration of the mobile phone, querying of a mobile phone failure in a browser of the mobile phone and/or querying of a mobile phone commodity in an E-business site. As used herein, the term "replaceable" is referring to when a mobile terminal is to be replaced with a different terminal (e.g. an upgrade to a newer model) because the terminal has reached, or has nearly reached, the end of its operational lifespan. Typically at, or towards, the end of a mobile terminal's lifespan one or more operational parameters will no longer be within normal boundaries and users may experience operational issues such as crashing or slow operation.

The terminal information may include at least one of the following information:
log information indicating failure occurrence of the terminal, terminal configuration information indicating that a terminal configuration is older than a latest configuration (for example an operating system version number is lower, or older, than the latest available operation system version number), battery usage information indicating that a continuous usage time is shorter than a preset time and an online browsing record; and
the online browsing record may indicate at least one of: a terminal product corresponding to the target terminal and a terminal failure.

The step that the replacement probability is sent to the target terminal may include that:
when the replacement probability is higher than or equal to a preset probability value, the replacement probability is sent to the target terminal.

The method may further include that:
when the replacement probability is higher than or equal to the preset probability value, the target terminal is controlled to output replacement prompting information, the replacement prompting information including the replacement probability.

The replacement prompting information may further include terminal product information corresponding to the target terminal.

Statistics are made to the replacement probability of the target terminal, and only when the replacement probability of the target terminal reaches a certain degree, the replacement probability is sent to the target terminal to prompt the user of the target terminal that the target terminal is required to be replaced. In such a manner, disturbance caused by frequent information sending to the target terminal to the user of the target terminal is avoided, antipathy of the user of the target terminal may be avoided on the premise of timely prompting the user that the target terminal is required to be replaced, and user experiences are improved.

Only when the replacement probability of the target terminal reaches a certain degree, the target terminal is controlled to output the replacement prompting information, so that disturbance caused by frequent information sending to the target terminal to the user of the target terminal is avoided, antipathy of the user of the target terminal may be avoided on the premise of timely prompting the user that the target terminal is required to be replaced, and user experiences are improved. Moreover, the terminal product information corresponding to the target terminal is further provided for the user of the target terminal, and then the user may have a certain understanding about a related product if being intended to replace the target terminal, so that user experiences are further improved.

The step that the replacement probability of the target terminal is updated according to the terminal information may include that:
a probability prediction model is acquired, the probability prediction model including a relationship between each piece of terminal information and a probability value; and
the replacement probability of the target terminal is acquired according to the terminal information and the relationship.

The relationship between each piece of terminal information and the probability value may include at least one of the following relationships:
a probability value corresponding to each piece of terminal information;
a weight corresponding to each piece of terminal information and configured to calculate a replacement probability; and
a function corresponding to each piece of terminal information and configured to calculate a replacement probability.

The replacement probability of the target terminal may be accurately obtained according to the acquired terminal information and the preset probability prediction model. For determination of the replacement probability of the target terminal, not only is the performance factor of the target terminal considered, but also the behavior factor of the user for the target terminal is considered, so that determination of the replacement probability is more accurate and consistent with the practical condition, the obtained replacement probability has higher reference value for the user, and better user experiences are provided.

According to a second aspect of the embodiments of the present disclosure, an information pushing device is provided, which includes:
an acquisition module, configured to acquire terminal information indicating that a target terminal is replaceable;
an updating module, configured to update a replacement probability of the target terminal according to the terminal information acquired by the acquisition module, an updated replacement probability being higher than the replacement probability before updating; and
a sending module, configured to send the replacement probability updated by the updating module to the target terminal.

The terminal information acquired by the acquisition module may include at least one of the following information:
log information indicating failure occurrence of a terminal, terminal configuration information indicating that a terminal configuration is older than a latest configuration, battery usage information indicating that a continuous usage time is shorter than a preset time and an online browsing record; and
the online browsing record may indicate at least one of: a terminal product corresponding to the target terminal and a terminal failure.

The sending module may be configured to, when the replacement probability updated by the updating module is higher than or equal to a preset probability value, send the replacement probability to the target terminal.

The device may further include:
a control module, configured to, when the replacement probability updated by the updating module is higher than or equal to the preset probability value, control the target terminal to output replacement prompting information, the replacement prompting information including the replacement probability.

The replacement prompting information may further include terminal product information corresponding to the target terminal.

The updating module may include:
a first acquisition sub-module, configured to acquire a probability prediction model, the probability prediction model including a relationship between each piece of terminal information and a probability value; and
a second acquisition sub-module, configured to acquire the replacement probability of the target terminal according to the terminal information acquired by the acquisition module and the relationship acquired by the first acquisition sub-module.

The relationship, acquired by the first acquisition sub-module, between each piece of terminal information and the probability value may include at least one of the following relationships:
a probability value corresponding to each piece of terminal information;
a weight corresponding to each piece of terminal information and configured to calculate a replacement probability; and
a function corresponding to each piece of terminal information and configured to calculate a replacement probability.

According to a third aspect of the embodiments of the present disclosure, an information pushing device is provided, which includes:
a processor; and
a memory configured to store instructions executable by the processor,
wherein the processor is configured to:
acquire terminal information indicating that a target terminal is replaceable;
update a replacement probability of the target terminal according to the terminal information, an updated replacement probability being higher than the replacement probability before updating; and
send the replacement probability to the target terminal.

The advantages and technical effects of the device according to the invention correspond to those of the method presented above.

In one particular embodiment, the steps of the information pushing method are determined by computer program instructions.

Consequently, according to a fourth aspect, the invention is also directed to a computer program for executing the steps of the information pushing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a flow chart showing an information pushing method, according to an exemplary embodiment.
Fig. 2 is a diagram of displaying replacement prompting information on a target terminal, according to an exemplary embodiment.
Fig. 3 is a flow chart showing an information pushing method, according to another exemplary embodiment.
Fig. 4 is a block diagram of an information pushing device, according to an exemplary embodiment.
Fig. 5 is a block diagram of an information pushing device, according to another exemplary embodiment.
Fig. 6 is a block diagram of an updating module, according to another exemplary embodiment.
Fig. 7 is a block diagram of an information pushing device, according to an exemplary embodiment.
Fig. 8 is a block diagram of an information pushing device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

The technical solutions provided by the embodiments of the present disclosure involve a terminal or a server, and whether it is necessary to replace a target terminal or not is prompted by acquiring related information of the target terminal and determining a replacement probability of the target terminal.

The terminal may be any equipment with a display, such as a mobile phone, a computer, a digital broadcast terminal, a messaging device, a gaming console, a tablet, a medical device, exercise equipment and a Personal Digital Assistant (PDA) or the like.

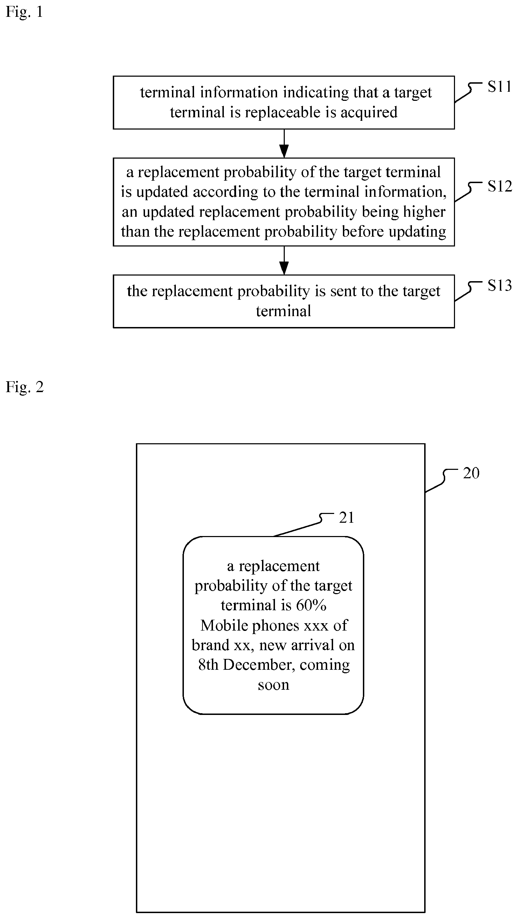

Fig. 1 is a flow chart showing an information pushing method, according to an exemplary embodiment, and as shown in Fig. 1, the information pushing method is applied for a terminal or a server, and includes the following steps.
Step S 11: terminal information indicating that a target terminal is replaceable is acquired.

Herein, the target terminal may be a mobile phone, a computer, a tablet computer, intelligent wearable equipment or the like. The target terminal may be a terminal determining a replacement probability.

The terminal information includes at least one of the following information: log information indicating failure occurrence of the terminal, terminal configuration information indicating that a terminal configuration is older than a latest configuration (for example an operating system version number is lower, or older, than the latest available operation system version number), battery usage information indicating that a continuous usage time is shorter than a preset time and an online browsing record. The online browsing record indicates at least one of: a terminal product corresponding to the target terminal and a terminal failure.

The log information indicating failure occurrence of the terminal includes: log information indicating restart of the terminal, low running speed, long-term operation of a storage space and the like.
Step S 12: a replacement probability of the target terminal is updated according to the terminal information, an updated replacement probability being higher than the replacement probability before updating.

For example, the replacement probability of the target terminal may be determined according to the terminal information such as restart times of the target terminal within a period of time, a time length for which a running speed of the target terminal is kept lower than a preset running speed and number of times of searching for the terminal product corresponding to the target product from the Internet by a user. If the restart times of the target terminal within a month is more than 10, the time length for which the running speed is kept lower than the preset running speed exceeds 60% of a running time length of the target terminal and the times of searching for another product similar to the target terminal from the Internet by the user exceeds 5, it may be determined that the replacement probability of the target terminal is 70%, that is, the target terminal is poor in performance, and may not meet a requirement of the user, and the user may replace the target terminal with a large probability.
Step S 13: the replacement probability is sent to the target terminal.

In the embodiment, the user is prompted whether to replace the target terminal or not by acquiring the terminal information of the target terminal and determining the replacement probability of the target terminal. For determination of the replacement probability of the target terminal, not only is a performance factor of the target terminal considered, but also a behavior factor of the user for the target terminal is considered, so that determination of the replacement probability is more accurate and consistent with a practical condition, the obtained replacement probability has higher reference value for the user, and better user experiences are provided.

In another embodiment, the step that the replacement probability is sent to the target terminal includes that: when the replacement probability is higher than or equal to a preset probability value, the replacement probability is sent to the target terminal.

For example, the preset probability value may be 60%, and only when the replacement probability is higher than or equal to 60%, the replacement probability is sent to the target terminal for prompting.

In the embodiment, statistics are made to the replacement probability of the target terminal, and only when the replacement probability of the target terminal reaches a certain degree, the replacement probability is sent to the target terminal to prompt the user of the target terminal that the target terminal is required to be replaced. In such a manner, disturbance caused by frequent information sending to the target terminal to the user of the target terminal is avoided, antipathy of the user of the target terminal may be avoided on the premise of timely prompting the user that the target terminal is required to be replaced, and user experiences are improved.

In another embodiment, the method further includes that: when the replacement probability is higher than or equal to the preset probability value, the target terminal is controlled to output replacement prompting information, the replacement prompting information including the replacement probability, wherein the replacement prompting information further includes terminal product information corresponding to the target terminal.

For example, when the replacement probability is higher than or equal to 60%, the target terminal is controlled to output the replacement prompting information. As shown in Fig. 2, a prompting dialog box 21 is displayed on an interface 20 of the target terminal. Only the replacement probability may be displayed in the prompting dialog box 21, and the terminal product information, provided for the user, corresponding to the target terminal may further be displayed. If the target terminal is a mobile phone, product information related to the mobile phone may be added into the replacement prompting information, including information such as information about a mobile phone product newly launched on the market or a related mobile phone product of the same model number.

In the embodiment, only when the replacement probability of the target terminal reaches a certain degree, the target terminal is controlled to output the replacement prompting information, so that disturbance caused by frequent information sending to the target terminal to the user of the target terminal is avoided, antipathy of the user of the target terminal may be avoided on the premise of timely prompting the user that the target terminal is required to be replaced, and user experiences are improved. Moreover, the terminal product information corresponding to the target terminal is further provided for the user of the target terminal, and then the user may have a certain understanding about a related product if being intended to replace the target terminal, so that user experiences are further improved.

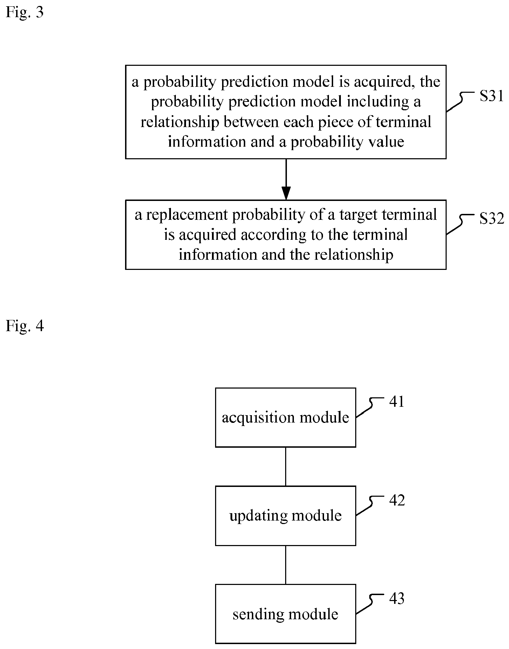

In another embodiment, the replacement probability corresponding to the terminal information is obtained by a pre-trained probability prediction model. Fig. 3 is a flow chart showing an information pushing method, according to another exemplary embodiment. As shown in Fig. 3, the step that the replacement probability of the target terminal is updated according to the terminal information includes:
Step S31: a probability prediction model is acquired, the probability prediction model including a relationship between each piece of terminal information and a probability value; and
Step S32: the replacement probability of the target terminal is acquired according to the terminal information and the relationship.

Herein, the relationship between each piece of terminal information and the probability value includes at least one of the following relationships:
a probability value corresponding to each piece of terminal information;
a weight corresponding to each piece of terminal information and configured to calculate a replacement probability; and
a function corresponding to each piece of terminal information and configured to calculate a replacement probability.

The probability value corresponding to each piece of terminal information may be pre-trained. For example, every time when the target terminal is restarted, the replacement probability value is increased by 0.5%. Every time when the user searches for the terminal product corresponding to the target terminal, the replacement probability value is increased by 0.2%.

For another example, a weight corresponding to the log information indicating failure occurrence of the terminal is 0.5, a weight corresponding to the terminal configuration information indicating that the terminal configuration is older than the latest configuration (for example an operating system version number is lower, or older, than the latest available operation system version number) is 0.2, a weight corresponding to the battery usage information indicating that the continuous usage time is shorter than the preset time is 0.2, and a weight corresponding to the online browsing record is 0.1. The replacement probability of the target terminal is calculated according to each piece of terminal information and its corresponding weight.

For another example, the function configured to calculate the replacement probability may be linear, and may also be nonlinear.

In the embodiment, the replacement probability of the target terminal may be accurately obtained according to the acquired terminal information and the preset probability prediction model. For determination of the replacement probability of the target terminal, not only is the performance factor of the target terminal considered, but also the behavior factor of the user for the target terminal is considered, so that determination of the replacement probability is more accurate and consistent with the practical condition, the obtained replacement probability has higher reference value for the user, and better user experiences are provided.

A device embodiment of the present disclosure will be described below, and may be configured to execute the method embodiment of the present disclosure.

Fig. 4 is a block diagram of an information pushing device, according to an exemplary embodiment, and the device may be implemented into part or all of electronic equipment by means of software, hardware or a combination thereof. As shown in Fig. 4, the information pushing device includes the following modules.

An acquisition module 41 is configured to acquire terminal information indicating that a target terminal is replaceable.

Optionally, the terminal information acquired by the acquisition module 41 includes at least one of the following information:
log information indicating failure occurrence of the terminal, terminal configuration information indicating that a terminal configuration is older than a latest configuration, battery usage information indicating that a continuous usage time is shorter than a preset time and an online browsing record, and
the online browsing record indicates at least one of: a terminal product corresponding to the target terminal and a terminal failure.

An updating module 42 is configured to update a replacement probability of the target terminal according to the terminal information acquired by the acquisition module 41, an updated replacement probability being higher than the replacement probability before updating.

For example, the replacement probability of the target terminal may be determined according to the terminal information such as restart times of the target terminal within a period of time, a time length for which a running speed of the target terminal is kept lower than a preset running speed and times of searching for the terminal product corresponding to the target product from the Internet by a user, and if the restart times of the target terminal within a month is more than 10, the time length for which the running speed is kept lower than the preset running speed exceeds 60% of a running time length of the target terminal and the times of searching for another product similar to the target terminal from the Internet by the user exceeds 5, it may be determined that the replacement probability of the target terminal is 70%, that is, the target terminal is poor in performance, and may not meet a requirement of the user, and the user may replace the target terminal with a large probability.

A sending module 43 is configured to send the replacement probability updated by the updating module 42 to the target terminal.

In the embodiment, the user is prompted whether to replace the target terminal or not by acquiring the terminal information of the target terminal and determining the replacement probability of the target terminal. For determination of the replacement probability of the target terminal, not only is a performance factor of the target terminal considered, but also a behavior factor of the user for the target terminal is considered, so that determination of the replacement probability is more accurate and consistent with a practical condition, the obtained replacement probability has higher reference value for the user, and better user experiences are provided.

Optionally, the sending module 43 is configured to, when the replacement probability updated by the updating module 42 is higher than or equal to a preset probability value, send the replacement probability to the target terminal.

For example, the preset probability value may be 60%, and only when the replacement probability is higher than or equal to 60%, the replacement probability is sent to the target terminal for prompting.

In the embodiment, statistics are made to the replacement probability of the target terminal, and only when the replacement probability of the target terminal reaches a certain degree, the replacement probability is sent to the target terminal to prompt the user of the target terminal that the target terminal is required to be replaced. In such a manner, disturbance caused by frequent information sending to the target terminal to the user of the target terminal is avoided, antipathy of the user of the target terminal may be avoided on the premise of timely prompting the user that the target terminal is required to be replaced, and user experiences are improved.

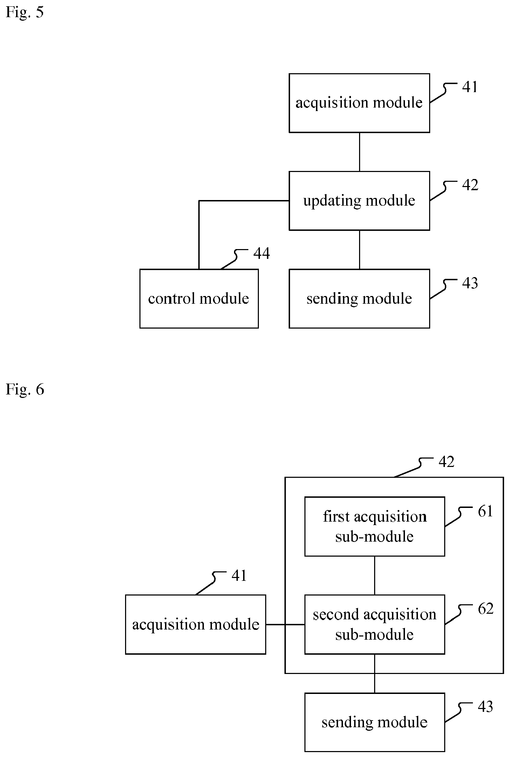

Fig. 5 is a block diagram of an information pushing device, according to another exemplary embodiment. As shown in Fig. 5, the device further includes:
a control module 44, configured to, when the replacement probability updated by the updating module 42 is higher than or equal to the preset probability value, control the target terminal to output replacement prompting information, the replacement prompting information including the replacement probability.

Optionally, the replacement prompting information further includes terminal product information corresponding to the target terminal.

For example, when the replacement probability is higher than or equal to 60%, the target terminal is controlled to output the replacement prompting information. As shown in Fig. 2, a prompting dialog box 21 is displayed on an interface 20 of the target terminal. Only the replacement probability may be displayed in the prompting dialog box 21, and the terminal product information, provided for the user, corresponding to the target terminal may further be displayed. If the target terminal is a mobile phone, product information related to the mobile phone may be added into the replacement prompting information, including information such as information about a mobile phone product newly launched on the market or a related mobile phone product of the same model number.

In the embodiment, only when the replacement probability of the target terminal reaches a certain degree, the target terminal is controlled to output the replacement prompting information, so that disturbance caused by frequent information sending to the target terminal to the user of the target terminal is avoided, antipathy of the user of the target terminal may be avoided on the premise of timely prompting the user that the target terminal is required to be replaced, and user experiences are improved. Moreover, the terminal product information corresponding to the target terminal is further provided for the user of the target terminal, and then the user may have a certain understanding about a related product if being intended to replace the target terminal, so that user experiences are further improved.

Fig. 6 is a block diagram of an updating module, according to another exemplary embodiment. As shown in Fig. 6, the updating module 42 optionally includes:
a first acquisition sub-module 61, configured to acquire a probability prediction model, the probability prediction model including a relationship between each piece of terminal information and a probability value; and
a second acquisition sub-module 62, configured to acquire the replacement probability of the target terminal according to the terminal information acquired by the acquisition module 41 and the relationship acquired by the first acquisition sub-module 61.

Optionally, the relationship, acquired by the first acquisition sub-module 61, between each piece of terminal information and the probability value includes at least one of the following relationships:
a probability value corresponding to each piece of terminal information;
a weight corresponding to each piece of terminal information and configured to calculate a replacement probability; and
a function corresponding to each piece of terminal information and configured to calculate a replacement probability.

The probability value corresponding to each piece of terminal information may be pre-trained. For example, every time when the target terminal is restarted, the replacement probability value is increased by 0.5%. Every time when the user searches for the terminal product corresponding to the target terminal, the replacement probability value is increased by 0.2%.

For another example, a weight corresponding to the log information indicating failure occurrence of the terminal is 0.5, a weight corresponding to the terminal configuration information indicating that the terminal configuration is older than the latest configuration is 0.2, a weight corresponding to the battery usage information indicating that the continuous usage time is shorter than the preset time is 0.2, and a weight corresponding to the online browsing record is 0.1. The replacement probability of the target terminal is calculated according to each piece of terminal information and its corresponding weight.

For another example, the function configured to calculate the replacement probability may be linear, and may also be nonlinear.

In the embodiment, the replacement probability of the target terminal may be accurately obtained according to the acquired terminal information and the preset probability prediction model. For determination of the replacement probability of the target terminal, not only is the performance factor of the target terminal considered, but also the behavior factor of the user for the target terminal is considered, so that determination of the replacement probability is more accurate and consistent with the practical condition, the obtained replacement probability has higher reference value for the user, and better user experiences are provided.

The present disclosure further provides an information pushing device, which includes:
a processor; and
a memory configured to store instructions executable by the processor,
wherein the processor is configured to:
acquire terminal information indicating that a target terminal is replaceable;
update a replacement probability of the target terminal according to the terminal information, an updated replacement probability being higher than the replacement probability before updating; and
send the replacement probability to the target terminal.

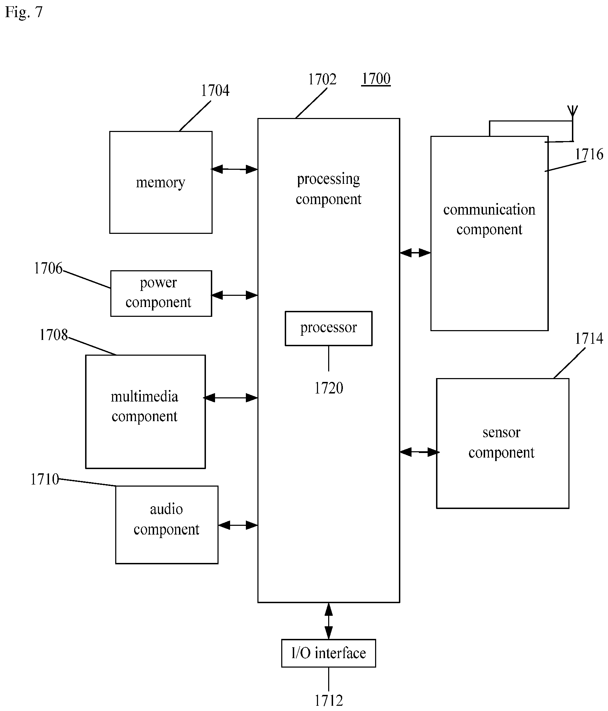

Fig. 7 is a block diagram of an information pushing device, according to an exemplary embodiment, and the device is applicable to terminal equipment. For example, the device 1700 may be a video camera, voice recording equipment, a mobile phone, a computer, a digital broadcast terminal, a messaging device, a gaming console, a tablet, a medical device, an exercise device, a Personal Digital Assistant (PDA) or the like.

The device 1700 may include one or more of the following components: a processing component 1702, a memory 1704, a power component 1706, a multimedia component 1708, an audio component 1710, an Input/Output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 may include one or more processors 1720 to execute instructions to perform all or part of the steps in the abovementioned method. Moreover, the processing component 1702 may include one or more modules which facilitate interaction between the processing component 1702 and the other components. For instance, the processing component 1702 may include a multimedia module to facilitate interaction between the multimedia component 1708 and the processing component 1702.

The memory 1704 is configured to store various types of data to support the operation of the device 1700. Examples of such data include instructions for any application programs or methods operated on the device 1700, contact data, phonebook data, messages, pictures, video, etc. The memory 1704 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1706 provides power for various components of the device 1700. The power component 1706 may include a power management system, one or more power supplies, and other components associated with the generation, management and distribution of power for the device 1700.

The multimedia component 1708 includes a screen providing an output interface between the device 1700 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1708 includes a front camera and/or a rear camera. The front camera and/or the rear camera may receive external multimedia data when the device 1700 is in an operation mode, such as a photographing mode or a video mode. Each of the front camera and the rear camera may be a fixed optical lens system or have focusing and optical zooming capabilities.

The audio component 1710 is configured to output and/or input an audio signal. For example, the audio component 1710 includes a Microphone (MIC), and the MIC is configured to receive an external audio signal when the device 1700 is in the operation mode, such as a call mode, a recording mode and a voice recognition mode. The received audio signal may be further stored in the memory 1704 or sent through the communication component 1716. In some embodiments, the audio component 1710 further includes a speaker configured to output the audio signal.

The I/O interface 1712 provides an interface between the processing component 1702 and a peripheral interface module, and the peripheral interface module may be a keyboard, a click wheel, a button or the like. The button may include, but not limited to: a home button, a volume button, a starting button and a locking button.

The sensor component 1714 includes one or more sensors configured to provide status assessment in various aspects for the device 1700. For instance, the sensor component 1714 may detect an on/off status of the device 1700 and relative positioning of components, such as a display and small keyboard of the device 1700. The sensor component 1714 may further detect a change in a position of the device 1700 or a component of the device 1700, presence or absence of contact between the user and the device 1700, orientation or acceleration/deceleration of the device 1700 and a change in temperature of the device 1700. The sensor component 1714 may include a proximity sensor configured to detect presence of an object nearby without any physical contact. The sensor component 1714 may also include a light sensor, such as a Complementary Metal Oxide Semiconductor (CMOS) or Charge Coupled Device (CCD) image sensor, configured for use in an imaging application. In some embodiments, the sensor component 1714 may also include an acceleration sensor, a gyroscope sensor, a magnetic sensor, a pressure sensor or a temperature sensor.

The communication component 1716 is configured to facilitate wired or wireless communication between the device 1700 and another device. The device 1700 may access a communication-standard-based wireless network, such as a Wireless Fidelity (Wi-Fi) network, a 2nd-Generation (2G) or 3rd-Generation (3G) network or a combination thereof. In an exemplary embodiment, the communication component 1716 receives a broadcast signal or broadcast associated information from an external broadcast management system through a broadcast channel. In an exemplary embodiment, the communication component 1716 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 1700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including instructions, such as the memory 1704 including instructions and the instructions may be executed by the processor 1720 of the device 1700 to implement the abovementioned method. For example, the non-transitory computer-readable storage medium may be a ROM, a Compact Disc Read-Only Memory (CD-ROM), a magnetic tape, a floppy disc, an optical data storage device or the like.

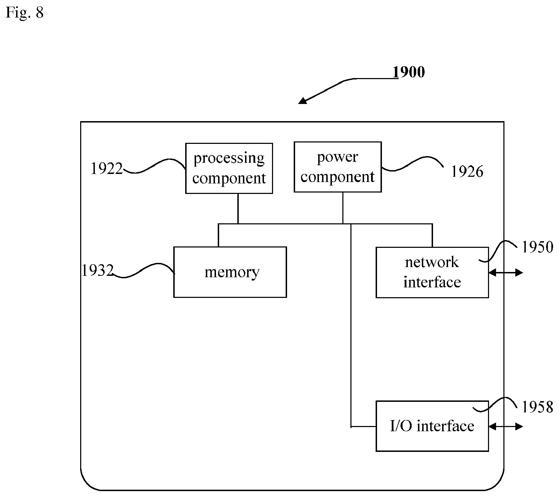

Fig. 8 is a block diagram of an information pushing device, according to an exemplary embodiment. For example, the device 1900 may be provided as a server. The device 1900 includes a processing component 1922, further including one or more processors, and a memory resource represented by a memory 1932, configured to store instructions executable by the processing component 1922, such as application programs. The application programs stored in the memory 1932 may include one or more than one module of which each corresponds to a set of instructions. In addition, the processing component 1922 is configured to execute the instructions, so as to execute the abovementioned method.

The device 1900 may further include a power component 1926 configured to execute power mangement of the device 1900, a wired or wireless network interface 1950 configured to connect the device 1900 to a network, and an I/O interface 1958. The device 1900 may be operated on the basis of an operating system stored in the memory 1932, such as Windows ServerTM, Mac OS XTM, UnixTM, LinuxTM, FreeBSDTM or the like.

According to a non-transitory computer-readable storage medium, when instructions in the storage medium are executed by the processor of the device 1700 or the device 1900, the device 1700 or the device 1900 may execute the abovementioned information pushing method, the method including that:
terminal information indicating that a target terminal is replaceable is acquired;
a replacement probability of the target terminal is updated according to the terminal information, an updated replacement probability being higher than the replacement probability before updating; and
the replacement probability is sent to the target terminal.

The terminal information includes at least one of the following information:
log information indicating failure occurrence of the terminal, terminal configuration information indicating that a terminal configuration is older than a latest configuration, battery usage information indicating that a continuous usage time is shorter than a preset time and an online browsing record; and
the online browsing record indicates at least one of: a terminal product corresponding to the target terminal and a terminal failure.

Optionally, the step that the replacement probability is sent to the target terminal includes that:
when the replacement probability is higher than or equal to a preset probability value, the replacement probability is sent to the target terminal.

Optionally, the method further includes that:
when the replacement probability is higher than or equal to the preset probability value, the target terminal is controlled to output replacement prompting information, the replacement prompting information including the replacement probability.

Optionally, the replacement prompting information further includes terminal product information corresponding to the target terminal.

Optionally, the step that the replacement probability of the target terminal is updated according to the terminal information includes that:
a probability prediction model is acquired, the probability prediction model including a relationship between each piece of terminal information and a probability value; and
the replacement probability of the target terminal is acquired according to the terminal information and the relationship.

Optionally, the relationship between each piece of terminal information and the probability value includes at least one of the following relationships:
a probability value corresponding to each piece of terminal information;
a weight corresponding to each piece of terminal information and configured to calculate a replacement probability; and
a function corresponding to each piece of terminal information and configured to calculate a replacement probability.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

### INDUSTRIAL APPLICATION

In the embodiment, a user is prompted whether to replace the target terminal or not by acquiring the terminal information of the target terminal and determining the replacement probability of the target terminal. For determination of the replacement probability of the target terminal, not only is a performance factor of the target terminal considered, but also a behavior factor of the user for the target terminal is considered, so that determination of the replacement probability is more accurate and consistent with a practical condition, the obtained replacement probability has higher reference value for the user, and better user experiences are provided.

In another embodiment, statistics are made to the replacement probability of the target terminal, and only when the replacement probability of the target terminal reaches a certain degree, the replacement probability is sent to the target terminal to prompt the user of the target terminal that the target terminal is required to be replaced. In such a manner, disturbance caused by frequent information sending to the target terminal to the user of the target terminal is avoided, antipathy of the user of the target terminal may be avoided on the premise of timely prompting the user that the target terminal is required to be replaced, and user experiences are improved.

In another embodiment, only when the replacement probability of the target terminal reaches a certain degree, the target terminal is controlled to output the replacement prompting information, so that disturbance caused by frequent information sending to the target terminal to the user of the target terminal is avoided, antipathy of the user of the target terminal may be avoided on the premise of timely prompting the user that the target terminal is required to be replaced, and user experiences are improved. Moreover, the terminal product information corresponding to the target terminal is further provided for the user of the target terminal, and then the user may have a certain understanding about a related product if being intended to replace the target terminal, so that user experiences are further improved.

In another embodiment, the replacement probability of the target terminal may be accurately obtained according to the acquired terminal information and the preset probability prediction model. For determination of the replacement probability of the target terminal, not only is the performance factor of the target terminal considered, but also the behavior factor of the user for the target terminal is considered, so that determination of the replacement probability is more accurate and consistent with the practical condition, the obtained replacement probability has higher reference value for the user, and better user experiences are provided.

## Claims

1. An information pushing method, **characterized in that** the method comprises:
acquiring (S11) terminal information indicating that a target terminal is replaceable;
updating (S12) a replacement probability of the target terminal according to the terminal information, an updated replacement probability being higher than the replacement probability before updating; and
sending (S 13) the replacement probability to the target terminal.

2. The method according to claim 1, wherein the terminal information comprises one or more of:
a performance indicator of the target terminal and a behavior factor of the user of the target terminal indicative of an operation performed by the user on the target terminal.

3. The method according to any preceding claim, wherein the terminal information comprises at least one of the following pieces of information:
log information indicating failure occurrence of a terminal; terminal configuration information indicating that a terminal configuration is older than a latest configuration; battery usage information indicating that a continuous usage time is shorter than a preset time; and an online browsing record that indicates at least one of: a terminal product corresponding to the target terminal and a terminal failure.

4. The method according to any preceding claim, wherein sending (S13) the replacement probability to the target terminal comprises:
when the replacement probability is higher than or equal to a preset probability value, sending the replacement probability to the target terminal.

5. The method according to any preceding claim, further comprising:
when the replacement probability is higher than or equal to the preset probability value, controlling the target terminal to output replacement prompting information, the replacement prompting information comprising the replacement probability.

6. The method according to claim 5, wherein the replacement prompting information further comprises terminal product information corresponding to the target terminal.

7. The method according to any preceding claim, wherein updating (S12) the replacement probability of the target terminal according to the terminal information comprises:
acquiring (S31) a probability prediction model, the probability prediction model comprising a relationship between each piece of terminal information and a probability value; and
acquiring (S32) the replacement probability of the target terminal according to the terminal information and the relationship.

8. The method according to claim 7, wherein the relationship between each piece of terminal information and the probability value comprises at least one of the following relationships:
a probability value corresponding to each piece of terminal information;
a weight corresponding to each piece of terminal information and configured to calculate a replacement probability; and
a function corresponding to each piece of terminal information and configured to calculate a replacement probability.

9. An information pushing device, **characterized in that**, the device comprises:
an acquisition module (41), configured to acquire terminal information indicating that a target terminal is replaceable;
an updating module (42), configured to update a replacement probability of the target terminal according to the terminal information acquired by the acquisition module, an updated replacement probability being higher than the replacement probability before updating; and
a sending module (43), configured to send the replacement probability updated by the updating module to the target terminal.

10. The device according to claim 9, wherein the terminal information acquired by the acquisition module comprises at least one of the following pieces of information:
log information indicating failure occurrence of a terminal; terminal configuration information indicating that a terminal configuration is older than a latest configuration; battery usage information indicating that a continuous usage time is shorter than a preset time and an online browsing record that indicates at least one of: a terminal product corresponding to the target terminal and a terminal failure.

11. The device according to claim 9 or 10, wherein the sending module (43) is configured to, when the replacement probability updated by the updating module is higher than or equal to a preset probability value, send the replacement probability to the target terminal.

12. The device according to any of claims 9 to 11, further comprising:
a control module (44), configured to, when the replacement probability updated by the updating module is higher than or equal to the preset probability value, control the target terminal to output replacement prompting information, the replacement prompting information comprising the replacement probability,
wherein the replacement prompting information further comprises terminal product information corresponding to the target terminal.

13. The device according to any of claims 9 to 12, wherein the updating module (42) comprises:
a first acquisition sub-module (61), configured to acquire a probability prediction model, the probability prediction model comprising a relationship between each piece of terminal information and a probability value; and
a second acquisition sub-module (62), configured to acquire the replacement probability of the target terminal according to the terminal information acquired by the acquisition module and the relationship acquired by the first acquisition sub-module,
wherein the relationship, acquired by the first acquisition sub-module, between each piece of terminal information and the probability value comprises at least one of the following relationships:
a probability value corresponding to each piece of terminal information;
a weight corresponding to each piece of terminal information and configured to calculate a replacement probability; and
a function corresponding to each piece of terminal information and configured to calculate a replacement probability.

14. An information pushing device, comprising:
a processor (1720, 1922); and
a memory (1704, 1932) configured to store instructions executable by the processor, **characterized in that**, the processor is configured to carry out the method according to any of claims 1 to 8.

15. A computer program including instructions for executing the steps of the information pushing method according to any one of claims 1 to 8 when said program is executed by a computer; or a recording medium readable by a computer and having recorded thereon a computer program including instructions for executing the steps of the information pushing method according to any one of claims 1 to 8.
